(19) Europäisches Patentamt / European Patent Office / Office européen des brevets

(11) **EP 2 606 540 B1**

(12) **FASCICULE DE BREVET EUROPEEN**

(45) Date de publication et mention
de la délivrance du brevet:
**26.08.2015 Bulletin 2015/35**

(21) Numéro de dépôt: **11758511.7**

(22) Date de dépôt: **16.08.2011**

(51) Int Cl.:
*H01S 3/10* (2006.01)          *H01S 3/16* (2006.01)
*H01S 3/042* (2006.01)          *H01S 3/0941* (2006.01)
*H01S 3/08* (2006.01)

(86) Numéro de dépôt international:
**PCT/FR2011/051921**

(87) Numéro de publication internationale:
**WO 2012/022915 (23.02.2012 Gazette 2012/08)**

(54) **AMPLIFICATEUR OPTIQUE ET LASER INCORPORANT UN TEL AMPLIFICATEUR**

OPTISCHER VERSTÄRKER UND LASER MIT EINEM DERARTIGEN VERSTÄRKER

OPTICAL AMPLIFIER AND LASER INCORPORATING SUCH AN AMPLIFIER

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **18.08.2010 FR 1056650**

(43) Date de publication de la demande:
**26.06.2013 Bulletin 2013/26**

(73) Titulaire: **Amplitude Systemes
33600 Pessac (FR)**

(72) Inventeurs:
- **COURJAUD, Antoine**
  F-33850 Leognan (FR)
- **RICAUD, Sandrine, Anne**
  F-91190 Gif Sur Yvette (FR)
- **DRUON, Frédéric, Pierre, Henri, Jacques**
  F-91400 Orsay (FR)
- **DOUALAN, Jean-Louis**
  F-14980 Rots (FR)
- **CAMY, Patrice, Jean-Pierre**
  F-14000 Caen (FR)

(74) Mandataire: **Coralis Harle
14-16, rue Ballu
75009 Paris (FR)**

(56) Documents cités:
WO-A2-2006/037076          WO-A2-2012/041279
DE-A1-102010 036 286          US-A- 3 453 215
US-A- 5 123 026          US-A- 5 272 710
US-A- 5 982 792          US-A1- 2009 274 181
US-A1- 2010 040 105          US-B1- 6 195 372

- DAVID C BROWN: "Ultrahigh-Average-Power Diode-Pumped Nd:YAG and Yb:YAG Lasers", IEEE JOURNAL OF QUANTUM ELECTRONICS, IEEE SERVICE CENTER, PISCATAWAY, NJ, USA, vol. 33, no. 5, 1 mai 1997 (1997-05-01), XP011051615, ISSN: 0018-9197
- SIEBOLD M ET AL: "Yb:CaF2 --- a new old laser crystal", APPLIED PHYSICS B ; LASERS AND OPTICS, SPRINGER, BERLIN, DE, vol. 97, no. 2, 15 September 2009 (2009-09-15), pages 327-338, XP019758897, ISSN: 1432-0649, DOI: 10.1007/S00340-009-3701-Y
- PUGZLYS A. ET AL: "Spectroscopy and lasing of cryogenically cooled Yb,â Na:CaF2", APPLIED PHYSICS B ; LASERS AND OPTICS, SPRINGER, BERLIN, DE, vol. 97, no. 2, 22 September 2009 (2009-09-22), pages 339-350, XP019758920, ISSN: 1432-0649, DOI: 10.1007/S00340-009-3740-4

**Description**

La présente invention concerne un amplificateur optique à faible défaut quantique et un laser incorporant un tel amplificateur.

Placé à l'intérieur d'une cavité optique résonnante, un amplificateur optique permet la réalisation d'un laser et donc la production d'un flux lumineux cohérent.

Classiquement, pour produire des faisceaux lasers puissants, on utilise des amplificateurs. Pour amplifier un faisceau laser, à une longueur d'onde d'émission déterminée, on utilise une pompe optique à une longueur d'onde inférieure de celle de l'onde d'émission et qui, selon l'art antérieur, est relativement éloignée de la longueur d'onde d'émission.

On considère généralement que le gain d'amplification est maximum pour des longueurs d'onde de pompe et d'émission relativement éloignées l'une de l'autre. Dés lors on peut utiliser des filtres dichroïques simples pour séparer les rayonnements à des longueurs d'onde proches de la longueur d'onde de pompage. Ils permettent le couplage du flux lumineux de pompe dans le cristal amplificateur et l'extraction du flux utile amplifié.

Le défaut quantique p est défini comme le paramètre qui représente la différence entre longueur d'onde d'émission laser $(\lambda_L)$ et de pompe $(\lambda_P)$ d'un amplificateur optique :

$$\rho = 1 - \frac{\lambda_P}{\lambda_L} \ .$$

Les amplificateurs performants à ce jour présentent un défaut quantique supérieur à une valeur minimum de l'ordre de 10%.

Différents cristaux peuvent être utilisés comme milieu amplificateur, en particulier, des cristaux à base de $CaF_2$ dopés par l'ion ytterbium ont été parfois utilisés, à température ambiante, dans des systèmes laser fonctionnant en régime femtoseconde. Dans ce cas encore, la longueur d'onde de pompe est relativement éloignée de la longueur d'onde d'émission.

Dans ce contexte de production de faisceaux laser de forte puissance, le document US 6,195,372 décrit différents dispositifs de refroidissement à des températures cryogéniques pour des lasers à solide à barreau de YAG. Selon ce document, le refroidissement cryogénique, c'est-à-dire au voisinage de 100 à 150 K, d'un laser à barreau de YAG permet simultanément d'augmenter la conductivité thermique et de réduire le coefficient d'expansion thermique du matériau, ce qui conduit à une augmentation de la puissance moyenne du laser.

On connaît d'après la demande de brevet US2009/0274181 A1 un laser à solide dont le milieu amplificateur comprend une matrice cristalline fluorée dopée à l'Ytterbium et notamment le fonctionnement d'un laser à cristal de Yb:LiLuF4 refroidi à une température inférieure à celle de l'azote liquide (77 K) et qui émet à deux longueur d'onde démission laser - 999 nm et 1024 nm -, pour une longueur d'onde d'absorption ou de pompe d'environ 960 nm.

Est aussi connu d'après la publication de Siebold et al., "Yb:CaF2 - a new old laser crystal", Applied Physics B, Lasers and Optics, 97:327-338 (2009), un cristal amplificateur de $Yb:CaF_2$ refroidi à une température cryogénique. Y sont décrit les propriétés d'absorption et d'émission de ce cristal, qui présente une forte absorption à la longueur d'onde usuelle de pompage de 980 nm, et une section efficace d'émission autour de 990 nm et de 1035 nm à 77 K, y compris les spectres d'absorption et d'émission d'un cristal de $Yb:CaF_2$, mais sans pour autant montrer que les considérations spectroscopiques (d'absorption et d'émission) permettent de choisir un système amplificateur particulier. Pour ce qui concerne les performances d'émission laser, on y apprend que lorsque pompé à une longueur d'onde de 979 nm, le cristal de $Yb:CaF_2$ émet un rayonnement laser à 1031 nm à très basse température, au lieu de 1046 nm à température ambiante.

Un objectif de l'invention est de développer un amplificateur optique ou un laser de haute puissance moyenne et/ou à fort gain d'amplification. Ce système laser de forte puissance moyenne peut fonctionner soit en régime continu soit en régime impulsionnel.

Pour atteindre cet objectif, les inventeurs exploitent le fait que les propriétés spectroscopiques et thermomécaniques des milieux amplificateurs dépendent essentiellement de leur température de mise en oeuvre. Toutefois, du fait de la complexité des effets physiques mis en jeu, il n'est pas possible de prévoir les propriétés d'un matériau donné à basse température. En particulier, il n'est pas possible de prévoir le fonctionnement d'un laser à solide à basse température pour un matériau quelconque. On ne dispose pas de mesures des sections efficaces résolues spectralement aux basses températures.

Ces matériaux cumulent à basse température deux avantages. L'émission laser se produit naturellement pour un faible défaut quantique, ce qui résulte en un faible dépôt thermique, et les propriétés optiques sont peu affectées pour un dépôt de chaleur. Dans le cadre de l'invention, ces éléments ont été mis à profit pour concevoir des dispositifs performants en sélectionnant le matériau amplificateur, sa température de mise en oeuvre et plus généralement, l'ensemble de ses conditions d'utilisation dans un amplificateur.

La présente invention a donc pour but un amplificateur laser de fort gain, optimisé pour les fortes puissances moyennes et /ou les fortes énergies utilisant des matériaux laser solides. L'invention est définie dans la revendication 1.

Dans différents modes de réalisation préférés, l'amplificateur de l'invention présente les caractéristiques suivantes éventuellement combinées.

- les ions actifs sont des ions ytterbium.

Les ions Ytterbium présentent la propriété principale recherchée ici, à savoir des sous niveaux Stark peu éclatés. De plus ils présentent des défauts quantiques faibles. Toutefois d'autres ions tels que les ions Erbium par exemple peuvent être mis en oeuvre dans le cadre de l'invention.

- la matrice hôte est un fluorure dopé à l'hytterbium.
- ledit fluorure fait partie de l'ensemble constitué par YLF, KYF$_4$, LiLF, BYF, CaF$_2$, SrF$_2$, BaF$_2$.

De bons résultats peuvent aussi être obtenus avec des fluorures codopés par exemple avec Na (sodium).

- le milieu amplificateur est: Yb:CaF$_2$, il est refroidi à 77 K, la longueur d'onde de pompe est 981 nm et il est apte à amplifier une onde à 992 nm.
- la matrice hôte fait partie des ensembles des zircons, des Scheelites, des tungstates.

Comme zircons on peut citer: YVO$_4$ et GdVO$_4$; comme Scheelites: BaW0$_4$, PbW0$_4$, SrW0$_4$, et CaW0$_4$; comme tungstates: KGW, KLuW et KYW. Quelques oxydes comme le YAP, les silicates comme le YSO, les borates comme le YAB donnent également de bons résultats.

- le défaut quantique p dudit milieu amplificateur est inférieur à 2 % à une température inférieure ou égale à 250 kelvin.
- la longueur d'onde de pompe est comprise entre 970 et 990 nm et la longueur d'onde d'émission est supérieure à 990 nm.
- lesdits moyens de multiplexage comprennent un filtre choisi parmi un filtre interférentiel, un réseau de Bragg en volume, un composant optique polarisant et/ou un composant optique apte à séparer angulairement un faisceau suivant un axe de pompage d'un faisceau suivant un axe d'émission laser, un filtre modal.

L'invention concerne également un laser mettant en oeuvre un tel amplificateur.

La présente invention concerne également les caractéristiques qui ressortiront de la description qui va suivre et qui devront être considérées isolément ou selon toutes leurs combinaisons techniquement possibles.

Cette description est donnée à titre d'exemple non limitatif fera mieux comprendre comment l'invention peut être réalisée en référence aux dessins annexés sur lesquels :

- les figures 1 à 4 représentent schématiquement un dispositif selon l'invention mettant en oeuvre différents dispositifs de multiplexage.
- la figure 5 représente la section efficace de gain de Yb:CaF$_2$ à 77 K en fonction de la longueur d'onde pour différents taux d'inversion de population des ions actifs;

- la figure 6 représente la puissance sortant d'une cavité laser exploitant un amplificateur selon l'invention, mesurée expérimentalement. Sur la même figure est représenté le spectre de gain théorique pour un taux d'inversion de population des ions actifs de 20%.

L'amplificateur optique de l'invention met avantageusement en oeuvre un cristal solide, en particulier un cristal de Yb :CaF$_2$ refroidi à une température cryogénique.

Dans un mode de réalisation particulier décrit comme exemple non limitatif, le cristal Yb:CaF$_2$ est pompé par diode et fonctionne à une température cryogénique de 77 K, il est placé au sein d'une cavité laser. Une puissance laser de 97 W à 1034 nm a été extraite pour une puissance de pompe de 245 W et une sortie 62 W. L'efficacité globale d'extraction correspondante est de 65 % par rapport à la puissance de pompe absorbée.

Le cristal 1 est de préférence un cristal de Yb:CaF$_2$ dopé à 2,2 % en Yb. Ce cristal 1 de 5 mm de long est placé dans un cryostat 2 sur une monture en cuivre refroidie directement à 77 K par de l'azote liquide. Le contact thermique du cristal 1 s'effectue sur les surfaces inférieure et supérieure d'une superficie de 5x7 mm$^2$ chacune. Une feuille d'indium de 200 $\mu$m d'épaisseur est insérée entre le cristal 1 et la monture en cuivre pour assurer le contact thermique et éviter toute contrainte dans le cristal due à une dilatation différentielle avec la monture. L'azote liquide peut donc être transféré dans le cryostat sans précaution spéciale, sans qu'aucun problème dû à un choc thermique ne puisse affecter le cristal.

Le cristal 1 ne comporte pas de revêtement de surface et est taillé légèrement en biais avec un angle de 2,5 degrés. Le cristal est incliné par rapport à l'axe optique pour éviter les effets de couplage des flux réfléchis dans la cavité laser. Le cristal Yb:CaF$_2$ est pompé par une diode 4 ayant une puissance de 245 W et couplée via une fibre optique 5 de 400 $\mu$m de diamètre et d'ouverture numérique (NA) égale à 0,22. La sortie de la fibre 5 est imagée sur le cristal 1 en utilisant deux systèmes optiques 6 et 6' à triplets de lentilles (50 mm/50 mm).

La transmission globale sur le système d'imagerie est tout d'abord mesurée en utilisant un miroir dichroïque et une première fenêtre de cryostat ayant une transmission de 87 % de manière à obtenir une puissance incidente maximum sur le cristal de 212 W.

Différentes mesures sont prises simultanément pour un point de fonctionnement donné. Ces mesures incluent la puissance moyenne du coupleur de sortie et d'une des réflexions Fresnel, l'enregistrement du profil de faisceau et du spectre, et une part de la puissance de pompe transmise pour évaluer la variation d'absorption dans l'amplificateur due aux différentes conditions d'absorption et de saturation.

La puissance de pompe incidente sur le cristal est avantageusement de 212 W. La puissance de pompe absorbée en l'absence d'effet laser est alors de 74 W mais du fait d'une forte saturation d'absorption cette valeur croît drastiquement pendant le fonctionnement de l'amplificateur. La puissance amplifiée maximum ($P_{tot}$) prenant en compte le faisceau de sortie du coupleur (POC) et les fuites ($4 \times P_{leak}$) est de 97,3 W pour un coupleur équivalent de 22 %. La longueur d'onde du faisceau produit est de 1034 nm. L'efficacité théorique du laser (puissance laser par rapport à la puissance de pompe absorbée) est excellente et atteint 65 %. Cette valeur est calculée en considérant la puissance de pompe absorbée, corrigée pendant le fonctionnement laser. En fait, cette absorption pendant le fonctionnement laser double comparée à une mesure sans effet laser. Ceci est dû à une réduction drastique de la saturation d'absorption de pompe. On observe que cette correction est rarement faite dans les publications antérieures (sur les matériaux lasers à base d'ytterbium) qui rapportent des efficacités atteignant de 80 à 90 %. Pour comparaison avec ces travaux, sans cette correction, notre efficacité atteindrait 131 % !

Selon un mode de réalisation préféré, le cristal est orienté de manière à maximiser la puissance d'une seule sortie, en recouplant dans la cavité deux des réflexions de Fresnel. La sortie optimale du coupleur 10 est alors de 20% en transmission et la puissance de sortie moyenne de 62 W.

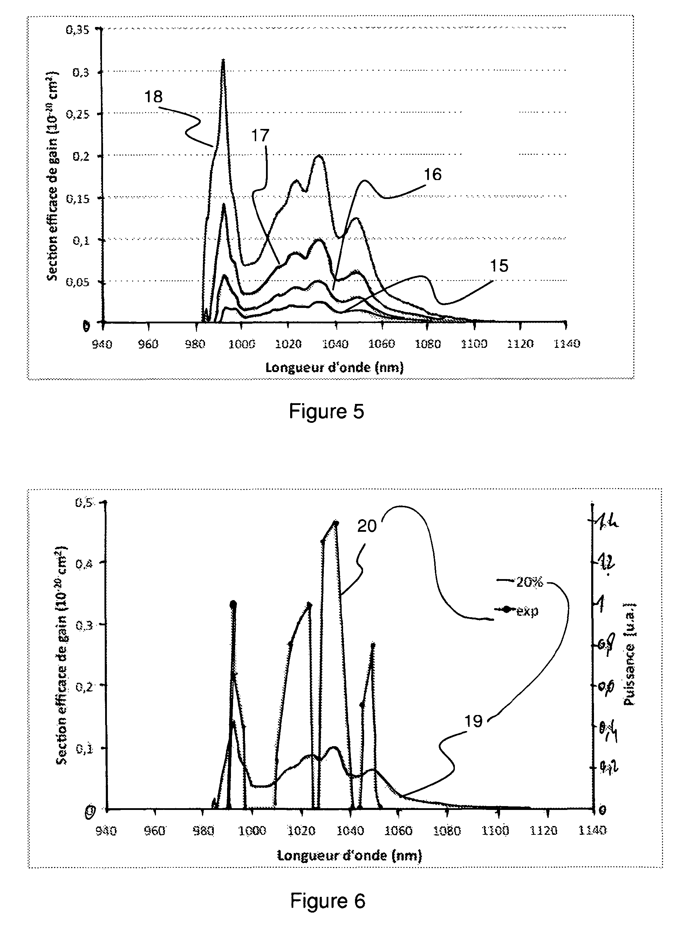

Le deuxième critère d'évaluation concerne le gain à faible signal du cristal de $Yb:CaF_2$ dans la perspective de développement d'un amplificateur d'impulsions courtes. Pour mieux mesurer le gain, nous évaluons la puissance moyenne en fonction des pertes en variant la transmission du coupleur de sortie (*cf.*figure 5). Le gain maximum correspond à 68% des pertes, ce qui conduit à un gain de 3,1 (pour un aller-retour dans la cavité). Considérons maintenant un aller-retour dans un cristal dopé à 2,2% en ions Ytterbium ($N=5,4.10^{20}$ ions/$cm^3$) ayant une longueur de 5 mm. Nous utilisons la formule du gain à faible signal, ce qui conduit à une section efficace de gain de $0,21.10^{-20}$ $cm^2$ à une longueur d'onde $\lambda_0$ égale à 1034 nm et avec un taux d'inversion de population des ions actifs de 0,45. Cette haute valeur d'inversion confirme d'une part la très grande efficacité d'absorption et d'autre part la forte saturation de l'absorption sans effet laser.

Le troisième critère concerne l'accordabilité en longueur d'onde. La figure 6 représente une mesure expérimentale d'accordabilité du laser cryogéné (en tirets) et une courbe de section efficace de gain à 77 K (en trait plein). On observe que les deux courbes sont en très bon accord et indiquent quatre régions spectrales différentes centrées respectivement à 992 nm, 1020 nm, 1034 nm et 1050 nm. Malgré la modification du spectre obtenue à la température cryogénique, les largeurs de bande sont relativement étalées tout spécialement dans la région 1010-1040 nm, ce qui rend l'amplificateur également intéressant pour l'amplification des impulsions courtes. On constate que, le gain maximum est à 992 nm. Ce qui explique qu'il peut être utilisé pour un effet laser naturel à forte puissance avec un défaut quantique p extrêmement faible de 1,1%.

L'amplificateur décrit présente donc des propriétés thermiques et spectroscopiques extrêmement intéressantes : une forte puissance moyenne, une très grande efficacité lorsqu'il est placé dans une cavité laser.

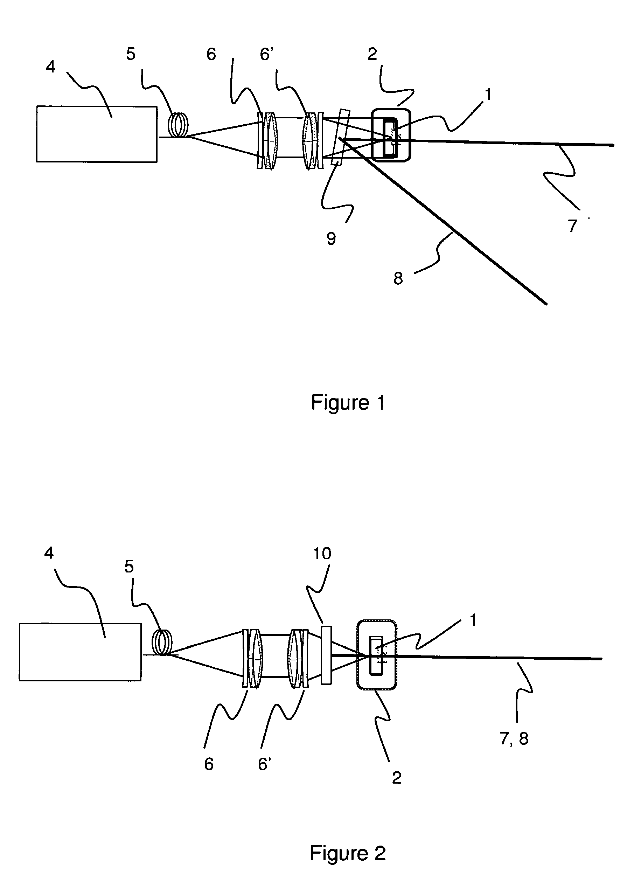

La proximité relative de la longueur d'onde d'émission et de la longueur d'onde de pompe qui sont typiquement séparées de quelques dizaines de nanomètres impose des contraintes très exigeantes sur les moyens de multiplexage de ces ondes dans le milieu amplificateur. Les figures 1 à 4 représentent chacune un mode particulier de multiplexage.

Sur les figures 1 à 4, un milieu amplificateur 1 contenu dans une enceinte 2, dite enceinte cryogénique, assurant le maintien de ce milieu amplificateur à basse température est pompée par une diode laser 4 par exemple à 981 nm. Un système d'imagerie comportant une fibre optique 5, et deux ensembles de lentilles 6 et 6' focalise le flux lumineux de la diode laser 4 sur le milieu amplificateur 1.

La figure 1 représente un mode de réalisation de l'invention mettant en oeuvre un multiplexage modal 9. Ce multiplexeur 9 est un miroir à occultation partielle. Il a des propriétés antireflets sur l'essentiel de sa surface, à l'exception d'un petit disque en son centre, pour la longueur d'onde de pompe, avantageusement de 980 à 990 nm. Au contraire, le petit disque au centre est très réfléchissant dans ce domaine spectral. Le faisceau à amplifier traverse le milieu amplificateur selon l'axe de pompage 7, le multiplexeur 9 renvoie le faisceau d'émission selon l'axe d'émission 8.

La figure 2 représente un mode de réalisation l'invention mettant en oeuvre un multiplexage spectral. Le filtre 10 est un filtre dichroïque présentant une fréquence de coupure précise entre la longueur d'onde du faisceau de pompe et celle du faisceau d'émission. Il a des propriétés antireflet à la longueur de pompe, ici 981 nm et est très réfléchissant à la longueur d'onde d'émission, ici, dés 992 nm. Les faisceaux à amplifier et d'émission sont schématisés selon le même axe 7, 8.

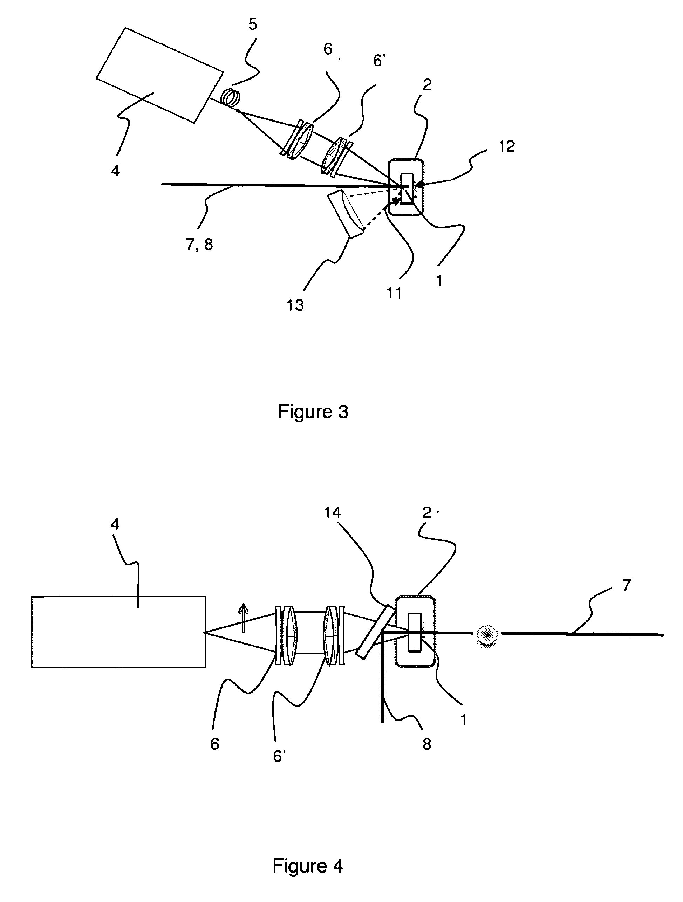

La figure 3 représente un mode de réalisation de l'invention mettant en oeuvre un multiplexage angulaire. Le faisceau de pompe est spatialement (angulairement) séparé du faisceau d'émission. Les faces du milieu amplificateur 1 sont avantageusement traitées. La face d'entrée 11 est recouverte d'un traitement anti-réfléchissant aux longueurs d'onde comprises entre 980 et 990 nm, la face opposée 12 est traitée de façon à être, au contraire fortement réfléchissante à ces mêmes longueurs d'onde. Un miroir 13 peut avantageusement collecter le flux de pompe réfléchi par le cristal amplificateur et le renvoyer vers celui-ci.

La figure 4 représente un mode de réalisation l'invention mettant en oeuvre un multiplexage en polarisation. Les faisceaux de pompe et le faisceau d'émission sont polarisés orthogonalement l'un à l'autre. Un polariseur 14 transmet l'onde de pompe et réfléchit l'onde d'émission.

L'amplificateur est donc un amplificateur optique utilisant un cristal solide (par exemple Yb:CaF$_2$) refroidi à une température cryogénique et dont on utilise une raie d'émission très proche de la longueur d'onde de pompage (la différence entre les longueurs d'onde de pompage et d'émission étant de préférence comprise entre 50 et 150-200 cm$^{-1}$), au lieu d'utiliser les raies classiques d'émission à de plus hautes longueurs d'onde.

La figure 5 représente le spectre de gain de Yb:CaF$_2$ à 77 K en fonction de la longueur d'onde, selon le taux d'inversion de la population des ions actifs. En ordonnée est représentée la section efficace de gain avec une unité de 10$^{-20}$ cm$^2$, en abscisse la longueur d'onde en nanomètre. La courbe référencée 15, correspond à une inversion de population de 5%, celle référencée 16, correspond à une inversion de population de 10%, celle référencée 17, correspond à une inversion de population de 20%, celle référencée 18, correspond à une inversion de population de 40%.

La figure 6 montre les performances expérimentales d'un milieu amplificateur de Yb:CaF$_2$ à 77 K, placé à l'intérieur d'une cavité laser accordable spectralement (courbe 20), comparées avec le spectre de gain (figure 5) pour un taux d'inversion de la population des ions actifs de 20% (courbe 19). L'ordonnée à gauche représente la section efficace de gain pour la courbe 19. A droite, est représentée la puissance de sortie pour la courbe 20.

Ces courbes font ressortir l'intérêt de l'invention et la possibilité qu'elle offre d'obtenir un gain d'amplification très élevé à 992 nm.

L'invention permet notamment d'améliorer le gain d'amplification et de réduire le dépôt de chaleur dans le milieu amplificateur solide. On obtient un laser ayant une raie laser « naturelle » à 992 nm et un facteur de mérite très important (amélioration d'un facteur 3 à 10). Le gain à faible signal du laser est évalué à 3,1.

L'invention permet des applications à des amplificateurs lasers à fort gain, à forte puissance moyenne en régime continu ou en régime impulsionnel nanoseconde, picoseconde, femtoseconde, et ce éventuellement à forte énergie. L'invention s'applique en particulier à la fabrication d'un amplificateur, dit « booster », pour amplifier une impulsion de faible puissance, faible énergie.

## Revendications

**1.** Amplificateur optique à fort gain d'une onde à amplifier à une longueur d'onde dite longueur d'onde d'émission comprenant :

- des moyens de pompage optique (4) produisant une onde de pompe à une longueur d'onde dite longueur d'onde de pompe;

- un milieu amplificateur solide (1) dopé par des ions actifs ledit milieu amplificateur solide (1) étant apte à émettre un rayonnement laser à une longueur d'onde d'émission lorsqu'il est pompé par lesdits moyens de pompage ;
- des moyens de refroidissement (2) aptes à refroidir ledit milieu amplificateur solide (1) à une température inférieure ou égale à 250 kelvin:
- des moyens de multiplexage optique aptes à coupler l'onde de pompe et l'onde à amplifier dans le milieu amplificateur;
la matrice hôte est une matrice cristalline de fluorure;
les ions actifs sont des ions Ytterbium;
**caractérisé en ce que** :

- la longueur d'onde de pompe $\lambda P$ est comprise entre 970 et 990 nm et la longueur d'onde d'émission $\lambda_L$ est supérieure à 990 nm,
- le défaut quantique p dudit milieu amplificateur (1) est inférieur à 2 % à une température inférieure ou égale à 250 Kelvin, le défaut quantique p étant défini par la formule : $\rho = 1 - \dfrac{\lambda_P}{\lambda_L}$ / et le milieu amplificateur solide (1) présente des sous-niveaux Stark contenus dans un domaine spectral d'étendue inférieure à 200 cm$^{-1}$, soit environ 20 nm exprimé en longueur d'onde;
- le taux d'inversion de population des ions actifs ytterbium étant supérieur à 20%, et les moyens de multiplexage étant adaptés pour séparer spatialement ladite onde de pompe du rayonnement laser et permettre l'émission d'un rayonnement laser naturel de forte puissance à une longueur d'onde d'émission centrée à 992 nm.

**2.** Amplificateur optique selon la revendication 1 **caractérisé en ce que** ledit fluorure fait partie de l'ensemble constitué par YLF, KYF$_4$, LuLiF$_4$, BYF, CaF$_2$, SrF$_2$, BaF$_2$.

**3.** Amplificateur optique selon la revendication 2 **caractérisé en ce que** le milieu amplificateur est Yb:CaF qu'il est refroidi à une température inférieure à 150 K, que la longueur d'onde de pompe est 981 nm et qu'il est apte à amplifier une onde à 992 nm.

**4.** Amplificateur optique selon l'une des revendications 1 à 3 dans lequel le taux d'inversion de population des ions actifs ytterbium est supérieur à 40%.

**5.** Amplificateur optique selon l'une des revendications 1 à 4 **caractérisé en ce que** lesdits moyens de multiplexage comprennent un filtre choisi parmi un filtre interférentiel, un réseau de Bragg en volume un composant optique polarisant et/ou un composant optique apte à séparer angulairement un faisceau suivant un axe de pompage d'un faisceau suivant un axe d'émission laser, un filtre modal.

**6.** Laser comportant une cavité optique résonnante et un amplificateur selon l'une quelconque des revendications 1 à 5.

## Patentansprüche

**1.** Optischer Verstärker mit hoher Verstärkung einer zu verstärkenden Welle bei einer als Sendewellenlänge bezeichneten Wellenlänge, der

- optische Pumpmittel (4), die eine Pumpwelle bei einer als Pumpwellenlänge bezeichneten Wellenlänge erzeugen.
- ein festes, mit aktiven Ionen dotiertes Verstärkungsmedium (1), wobei das feste Verstärkungsmedium (1) dazu geeignet ist, eine Laserstrahlung bei einer Sendewellenlänge auszustrahlen, wenn es durch die Pumpmittel gepumpt wird,
- Fühlmittel (2), die dazu geeignet sind, das feste Verstärkungsmedium (1) auf eine Temperatur von weniger als oder gleich 250 Kelvin zu kühlen,
- optische Multiplexmittel, die dazu geeignet sind, die Pumpwelle und die im Verstärkungsmedium zu verstärkende Welle zu koppeln,

aufweist,
wobei die Wirtmatrix eine kristalline Fluorid-Matrix ist und
die aktiven Ionen Ytterbiumionen sind,
**dadurch gekennzeichnet, dass**

- die Pumpwellenlänge $\lambda_p$ zwischen 970 und 990 nm beträgt und die Sendewellenlänge $\lambda_L$ grösser als 990 nm ist,
- der Quantendefekt p des Verstärkungsmediums (1) kleiner als 2 % bei einer Temperatur von weniger als oder gleich 250 Kelvin ist, wobei der Quantendefekt durch die Formel

$$\rho = 1 - \frac{\lambda_p}{\lambda_L}$$

definiert ist,
und das feste Verstärkungsmedium (1) Stark'sche Unterniveaus aufweist, die sich in einem Spektralbereich von weniger als 200 cm$^{-1}$, d.h. in Wellenläge ausgedruckt etwa 20 mm, erstrecken.
- die Quote der Besetzungsinversion aktiver Ytterbiumionen grösser als 20 % ist und die Multiplexmittel dazu geeignet sind, insbesondere die Pumpwelle von der Laserstralllung räumlich zu trennen und die Ausstrahlung einer natürlichen Gaserstrahlung grosser Leistung bei einer um 992 nm. zentrierten Sendewellenlänge zu ermöglichen.

**2.** Optischer Verstärker gemäss Anspruch 1, **dadurch gekennzeichnet, dass** das Fluorid Teil der Gesamtheit aus YLF, KYF$_4$, LuLiF$_4$, BYF, CaF$_2$, SrF$_2$, BaF$_2$ ist.

**3.** Optischer Verstärker gemäss Anspruch 2, **dadurch gekennzeichnet, dass** das Verstärkungsmedium Yb:CaF ist, das auf eine Temperatur von weniger als 150 Kelvin gewühlt ist, dass die Pumpwellenlänge 981 nm beträgt und dass er dazu geeignet ist, eine Welle bei 992 nm zu verstärkern.

**4.** Optischer Verstärker gemäss einem der Ansprüche 1 bis 3, **dadurch gekennzeichnet, dass** die Quote der Besetzungsinversion aktiver Ytterbiumionen grösser als 40 % ist.

**5.** Optischer Verstärker gemäss einem der Ansprüche 1 bis 4, **dadurch gekennzeichnet, dass** die Multiplexmittel einen Filter aufweisen, der aus einem Interferenzfilter, einem Volumen-Bragg-Gitter, einem polarisierenden optischen Bauteil und/oder einem optischen Bauelement, das einen Strahl winkelmässig entlang einer Pumpachse eines einer Laseremissionsachse folgenden Strahls aufteilt, einem Modalfilter ausgewählt ist.

**6.** Laser, der eine optische Resonanzkammer und einen Verstärker gemäss einem der Ansprüche 1 bis 5 aufweist.

## Claims

**1.** A high-gain optical amplifier for a wave to be amplified at a wavelength referred to as the emission wavelength, comprising:

- optical pumping means (4) producing a pump wave at a wavelength referred to as the pump wavelength;
- a solid amplifying medium (1) that is doped with active ions, said solid amplifying medium (1) being capable of emitting laser radiation at an emission wavelength when it is pumped by said pumping means;

- cooling means (2) capable of cooling said solid amplifying medium (1) to a temperature lower than or equal to 250 kelvin;
- optical multiplexing means capable of coupling together the pump wave and the wave to be amplified in the amplifying medium;
- the host matrix is a crystalline fluoride matrix;
- the active ions are ytterbium ions;

**characterized in that**:

- the pump wavelength $\lambda_P$ is comprised between 970 and 990 nm and the emission wavelength $\lambda_L$ is higher than 990 nm,
- the quantum defect of said amplifying medium (1) is lower than 2 % at a temperature lower than or equal to 250 kelvin, the quantum defect being defined by the formula:

$$\rho = 1 - \frac{\lambda_P}{\lambda_L},$$

and the solid amplifying medium (1) has Stark sublevels contained within a spectral domain ranging over less than 200 cm$^{-1}$ , that is about 20 nm when expressed in wavelength;
- the ytterbium active ions population inversion rate being higher than 20 %, and the multiplexing means being adapted to spatially separate said pump wave from the laser radiation and to enable emission of a high-power natural laser radiation at an emission wavelength centered on 992 nm.

2. The optical amplifier according to claim 1, **characterized in that** said fluoride is part of the set consisted by YLF, KYF$_4$, LuLiF, BYF, CaF$_2$, SrF$_2$, BaF$_2$.

3. The optical amplifier according to claim 2, **characterized in that** the amplifying medium is Yb:CaF$_2$, it is cooled to a temperature lower than 150 K, the pump wavelength is 981 nm, and it is capable of amplifying a wave at 992 nm.

4. The optical amplifier according to any one of claims 1 to 3, **characterized in that** the ytterbium active ions population inversion rate is higher than 40 %.

5. The optical amplifier according to any one of claims 1 to 4, **characterized in that** said multiplexing means comprise a filter chosen among an interferential filter, a volume Bragg grating, a polarizing optical component and/or an optical component capable of angularly separating a beam along a pump axis from a beam along a laser emission axis, a modal filter.

6. A laser comprising a resonant optical cavity and an amplifier according to any one of claims 1 to 5.

Figure 1

Figure 2

Figure 3

Figure 4

Figure 5

Figure 6

# RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 6195372 B

- US 20090274181 A1

**Littérature non-brevet citée dans la description**

- **SIEBOLD et al.** Yb:CaF2 - a new old laser crystal. *Applied Physics B, Lasers and Optics,* 2009, vol. 97, 327-338